# EUROPÄISCHE PATENTSCHRIFT

(11) **EP 0 617 260 B1**
(45) Veröffentlichungstag und Bekanntmachung des Hinweises auf die Patenterteilung: **29.12.1997**
(21) Anmeldenummer: 94103863.0
(22) Anmeldetag: 14.03.1994
(51) Int. Cl.: G01D 5/16, B60G 17/015

(54) **Fahrzeugniveaugeber**
Level sensor for vehicles
Capteur de hauteur pour véhicules

(30) Priorität: 23.03.1993 DE 4309226
(43) Veröffentlichungstag der Anmeldung: 28.09.1994
(73) Patentinhaber: Hella KG Hueck & Co., 59552 Lippstadt (DE)
(72) Erfinder: König, Wilfried, D-59555 Lippstadt (DE)

(56) Entgegenhaltungen:
- EP-A- 0 318 145
- GB-A- 2 229 006
- US-A- 4 500 867

## Beschreibung

Die Erfindung betrifft einen Fahrzeugniveaugeber mit zwei beweglich zueinander angeordneten, miteinander verbundenen Bauteilen, wobei das eine Bauteil mit dem Fahrzeugchassis und das andere Bauteil mit der Radaufhängung verbunden ist und mit einer Meßeinrichtung zur Bestimmung der Lageänderung zwischen den Bauteilen.

Aus der europäischen Patentanmeldung EP 0 318 145 A2 und der GB-A-2 229 006 ist ein Fahrzeugniveaugeber bekannt, der zur Messung der Lageänderung der Karosserie des Kraftfahrzeuges zur Straße zwischen dem Fahrzeugchassis und der Radaufhängung angeordnet ist. Ein erstes Bauteil ist dabei fest mit dem Fahrzeugchassis verbunden und ein zweites beweglich zu dem ersten Bauteil angeordnetes Bauteil ist über Verbindungselemente mit der Radaufhängung verbunden. Das mit dem Fahrzeugchassis verbundene Bauteil weist eine Meßeinrichtung zur Bestimmung der Lageänderung zwischen dem ersten und dem zweiten Bauteil auf.

Bei diesem vorbekannten Fahrzeugniveaugeber erweist sich als nachteilig, daß die Meßeinrichtung zur Bestimmung der Lageänderung zwischen den Bauteilen z.B. als eine Hallgeberanordnung aufgebaut ist, die es erforderlich macht, um eine exakte Bestimmung der Lage zu gewährleisten, eine große Anzahl von Magneten und Hall-Effekt-Schaltern in der Meßeinrichtung anzuordnen. Hierdurch erweist sich als besonderes nachteilig, daß der Fahrzeugniveaugeber ein großes Gehäuse für die Aufnahme der Meßeinrichtung benötigt und somit viel Platz in Anspruch nimmt.

Durch das verwendete Meßprinzip ist bei diesem vorbekannten Fahrzeugniveaugeber auch nachteilig, daß das Meßsignal nur stufig und nicht kontinuierlich mit der Änderung der Lage der Kraftfahrzeugkarosserie erzeugt wird. Hierdurch wird die Einsatzfähigkeit des Fahrzeugniveaugebers eingeschränkt.

Als besonders nachteilig erweist sich bei dem bekannten Fahrzeugniveaugeber, daß die beiden gegeneinander beweglichen Bauteile nur in einer Ebene zueinander beweglich sind, so daß für den gewählten Anbauort zwischen Fahrzeugchassis und Radaufhängung eine zusätzliche Übersetzung der dort auftretenden räumlichen Bewegungen in die Bewegungsebene des Fahrzeugniveaugebers erforderlich ist, was zu höheren Kosten, einem aufwendigen Aufbau des Gebers und zu einem großen Platzbedarf des Gebers führt, der häufig nicht gegeben ist.

Aus der europäischen Patentschrift EP 0 217 478 B1 ist ein Winkelsensor bekannt, der zur Bestimmung des Drehwinkels einer Welle, einen auf diese Welle aufgesetzten Permanentmagneten aufweist, dem ein magnetfeldempfindlicher Fühler zugeordnet ist, der durch eine elektronische Schaltung angesteuert wird. Ein solcher magnetoresistiver Sensor erzeugt ein von der Lage des Magnetfelds abhängiges, eine Information über die Winkelposition beinhaltendes Ausgangssignal.

Bei diesem vorbekannten Winkelsensor erweist sich als nachteilig, daß dieser nicht für die Verwendung als ein Fahrzeugniveaugeber ausgebildet ist und nicht für den Anbau als solcher zwischen einem Fahrzeugchassis und der Radaufhängung des Fahrzeuges geeignet ist. Insbesondere erweist sich bei dem bekannten Winkelsensor als nachteilig, daß dieser keine räumliche Bewegung zuläßt.

Aus der US-Patentschrift US-A-4 500 867 ist eine Sensoranordnung für ein Joystick-Steuergerät bekannt, das eine räumliche Bewegung des Bedienelementes durch Einsetzen eines Kugelkopfes in eine Kugelschale zuläßt. Als Meßprinzip wird ein Permanentmagnet in symmetrischer ringförmiger Ausführung in dem Kugelkopf mindestens zwei magnetfeldempfindlichen Fühlern im Bereich der Kugelpfanne zugeordnet. Als nachteilig erweist sich bei dieser Meßeinrichtung, daß im wesentlichen Kippbewegungen des mit dem Kugelkopf verbundenen Bedienelements, jedoch keine Drehbewegungen in der Achse des Bedienelementes gemessen werden können. Diese Meßeinrichtung erweist sich somit für die Anwendung in einem Fahrzeugniveausensor zur Umsetzung einer Drehbewegung der Achse in entsprechende Meßwerte als ungeeignet.

Der Erfindung liegt die Aufgabe zugrunde, einen Fahrzeugniveaugeber zu schaffen, der einfach und kostengünstig herstellbar und montierbar ist, der eine geringe Baugröße aufweist, der eine räumliche Bewegung zuläßt und möglichst exakte Meßergebnisse erzeugt.

Die Aufgabe wird erfindungsgemäß durch die Merkmale des Anspruchs 1 gelöst.

Es ist von Vorteil, daß die Meßeinrichtung ein magnetoresistiver Sensor, bestehend aus einem magnetfeldempfindlichen Fühler und einem Permantmagneten ist, weil somit eine berührungslose, kontinuierliche und möglichst exakte Messung der Lageänderungen der Kraftfahrzeugkarosserie auf einfache und kostengünstige Weise durchgeführt werden kann.

Dadurch, daß die Bauteile durch ein Kugelgelenk, bestehend aus einer Kugelpfanne und einem in die Kugelpfanne eingesetzten Kugelkopf miteinander verbunden sind, ergibt sich der Vorteil, daß der Fahrzeugniveaugeber direkt ohne die räumlichen Bewegungen umlenkende Verbindungselemente zwischen das Fahrzeugchassis und die Radaufhängung angeordnet werden kann, da das Kugelgelenk den in diesen Bereich auftretenden räumlichen Bewegungen folgt, wodurch eine einfache und kostengünstige Montage des Fahrzeugniveaugebers gewährleistet wird und dieser zudem möglichst wenig Platz beansprucht.

In diesem Zusammenhang erweist sich als besonders vorteilhaft, daß der magnetfeldempfindliche Fühler und der Permanentmagnet sich gegenüberliegend in dem Kugelkopf und im Bereich der Kugelpfanne angeordnet sind, wodurch eine besonders exakte Zuordnung und Lagerung von Permanentmagnet und Fühler gewährleistet wird, so daß die erzeugten Meßsignale bestmöglich die tatsächlichen Lageänderungen der Kraftfahrzeugkarosserie wiedergeben, ohne daß die im Achsbereich auftretenden räumlichen Bewegungen stören.

Dadurch, daß das mit dem Fahrzeugchassis verbundene Bauteil ein Gehäuse aufweist, daß in das Gehäuse ein das Gehäuse abschließender Einsatz eingesetzt ist, daß der Einsatz einen elektrischen Steckverbinder aufweist, daß der elektrische Steckverbinder elektrisch leitend mit einer Leiterplatte in dem Gehäuse verbunden ist und daß der magnetfeldempfindliche Fühler mit der Leiterplatte verbunden ist, ergibt sich ein besonders einfacher, kostengünstiger und platzsparender Aufbau eines Fahrzeugniveaugebers, wodurch eine hohe Zuverlässigkeit und Genauigkeit bei der Erzeugung der Meßsignale erreicht wird.

In diesem Zusammenhang erweist sich als besonders vorteilhaft, daß die für den Betrieb des magnetfeldempfindlichen Fühlers erforderliche Schaltungsanordnung auf der Leiterplatte angeordnet ist, wodurch über den Steckverbinder ein direkt für eine Regelung verwertbares Signal geliefert wird und die Störanfälligkeit des Fahrzeugniveaugebers herabgesetzt wird, da Störeinflüsse, wie zum Beispiel durch elektromagnetische Strahlungen, bestmöglich abgeschirmt werden können.

Es ist von Vorteil, daß zwischen dem Gehäuse und dem Einsatz eine Dichtung angeordnet ist, wodurch der magnetoresistive Sensor bestmöglich vor Umwelteinflüssen geschützt wird.

Dadurch, daß das Gehäuse eine Befestigungseinrichtung zur Befestigung mit dem Fahrzeugchassis aufweist, ergibt sich eine besonders einfache und kostengünstige Montierbarkeit des Fahrzeugniveaugebers.

Es ist vorteilhaft, daß die Kugelpfanne mit dem Gehäuse verbunden ist und daß der Kugelkopf mit dem mit der Radaufhängung verbundenen Bauteil verbunden ist, weil sich somit ein besonders einfacher Aufbau des Fahrzeugniveaugebers ergibt.

In diesem Zusammenhang erweist sich als besonders vorteilhaft, daß der Permanentmagnet in dem Kugelkopf angeordnet ist und daß der Fühler in dem Gehäuse oder der Kugelpfanne angeordnet ist, wodurch eine optimale Zuordnung und Lagerung des Fühlers zu dem Permanentmagneten erreicht wird und der Fahrzeugniveaugeber möglichst geringe Abmessungen aufweist.

Die gleichen Vorteile ergeben sich bei Anwendung der in den Ansprüchen 8 und 9 aufgeführten Merkmale.

Dadurch, daß das mit der Radaufhängung verbundene Bauteil aus einem mit der Kugelpfanne oder dem Kugelkopf verbundenen Zapfen und/oder einer Stange besteht, ergibt sich der Vorteil einer besonders einfachen Anbringung des Fahrzeugniveaugebers an der Radaufhängung.

Dadurch, daß ein Faltenbalg die Verbindung, bestehend aus Kugelkopf und Kugelpfanne umschließt, ergibt sich der Vorteil, daß diese Verbindung bestmöglich vor Umwelteinflüssen geschützt wird, so daß zum Beispiel Staub, Dreck und Feuchtigkeit die Meßergebnisse nicht negativ beeinflussen können und eine hohe Langlebigkeit erreicht wird.

Es ist vorteilhaft, an dem Kugelkopf ein die Kippbewegung begrenzenden Kragen anzuordnen, weil somit große, die Messung negativ beeinflussende Kippbewegungen vermieden und in eine gewünschte Drehbewegung umgewandelt werden.

Es ist von Vorteil, den Fahrzeugniveaugeber in Leuchtweiteregeleinrichtungen von Kraftfahrzeugen zu verwenden, weil somit auf einfache und kostengünstige Weise exakte, die Lageänderungen der Karosserie wiedergebende Meßsignale der Regelung zur Verfügung gestellt werden können, so daß z. B. eine schnelle, dynamische Regelung der Leuchtweite bei einer großen Langzeitzuverlässigkeit ermöglicht wird.

Die gleichen Vorteile ergeben sich bei der Verwendung in Niveauregeleinrichtungen oder aktiven Fahrwerksregeleinrichtungen.

Ausführungsbeispiele des Erfindungsgegenstandes sind in den Zeichnungen dargestellt und werden im folgenden anhand der Zeichnungen erläutert.

Gleiche oder gleichwirkende Bauteile sind in allen Figuren mit gleichen Bezugszeichen versehen.

Es zeigen
- Figur 1: einen Fahrzeugniveaugeber im seitlichen Schnitt;
- Figur 2: eine besondere Ausführung eines Fahrzeugniveaugebers gemäß Figur 1.

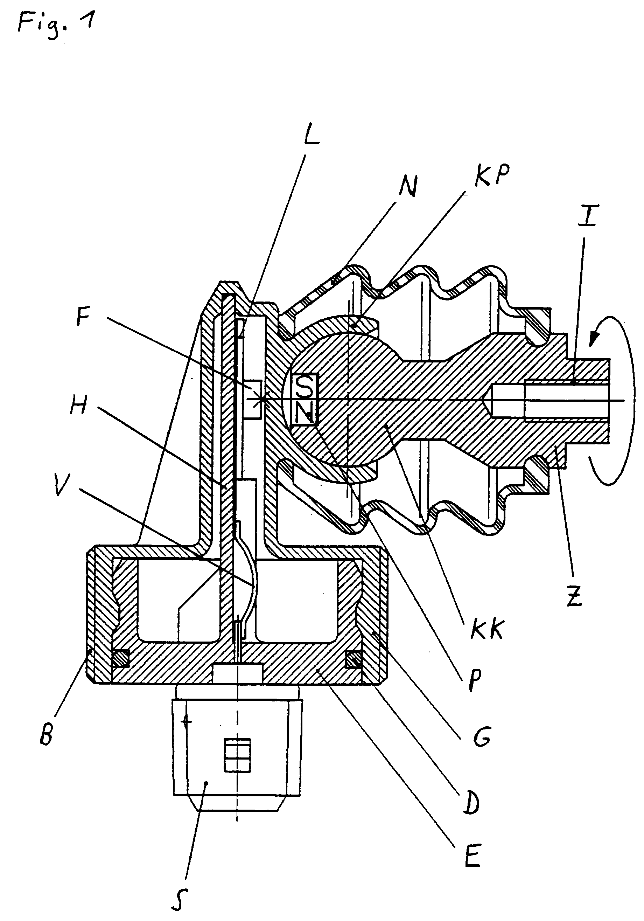

Figur 1 zeigt in vergrößerter Darstellung einen erfindungsgemäßen Fahrzeugniveaugeber in einem seitlichen Schnitt. Der Fahrzeugniveaugeber weist zwei über eine Kugelpfanne (KP) und einen Kugelkopf (KK) miteinander beweglich verbundene Bauteile auf, die zwischen dem Fahrzeugchassis und der Radaufhängung angeordnet werden. Das eine Bauteil weist ein Gehäuse (G) auf, das hier beispielhaft einstückig mit der Kugelpfanne (KP) verbunden ist. In das Gehäuse (G) ist ein Einsatz (E) eingesetzt, der das Gehäuse (G) abschließt. Der Einsatz (E) ist dabei über eine Dichtung (D) gegenüber das Gehäuse (G) abgedichtet.

Bei dem hier gezeigten Ausführungsbeispiel erfolgt die Verbindung zwischen dem Einsatz (E) und dem Gehäuse (G) über eine Verrastung. Das Gehäuse (G) weist eine lösbare Befestigungseinrichtung (B) auf, die hier beispielhaft als ein außen auf dem Gehäuse (G) aufgebrachtes Gewinde zur Montage mit dem Fahrzeugchassis ausgebildet ist.

Der Einsatz (E) weist einen mehrpoligen Steckverbinder (S) auf, der elektrisch leitend mit einer Leiterplatte (L) in dem Gehäuse (G) verbunden ist. Bei dem hier gezeigten Ausführungsbeispiel ist die Leiterplatte (L) auf einem einstückig mit dem Einsatz (E) ausgebildeten Halter (H) angeordnet. Die elektrische Verbindung zwischen dem Steckverbinder (S) und der Leiterplatte (L) erfolgt hier beispielhaft über Verbindungselemente (V).

Bei dem hier gezeigten Ausführungsbeispiel ist auf der Leiterplatte (L) direkt unterhalb des Scheitelpunktes der Öffnung der Kugelpfanne (KP) ein magnetfeldempfindlicher Fühler (F) angeordnet. Auf der Leiterplatte (L) sind die für den Betrieb des magnetfeldempfindlichen Fühlers (F) erforderlichen elektrischen und elektronischen Bauteile angeordnet. Ein Hybridmodul, das auf der Leiterplatte die elektronischen Bauteile und den Fühler aufweist, kann zum Beispiel von der Firma Philips unter der Bezeichnung KM 110 BH/21-30 bezogen werden.

Das zweite mit der Radaufhängung zu verbindende Bauteil ist bei dem hier gezeigten Ausführungsbeispiel ein Zapfen (Z), der einstückig mit dem Kugelkopf (KK) ausgebildet ist. In dem oberen Scheitelpunkt des Kugelkopfes (KK) ist ein Permanentmagnet (P) derart eingesetzt, daß er dem im Bereich der Kugelpfanne (KP) angeordneten Fühler (F) direkt gegenüberliegt. Bei dem hier gezeigten Ausführungsbeispiel weist der Zapfen (Z) eine lösbare Verbindungseinrichtung (I) auf, die hier beispielhaft als ein Innengewinde ausgebildet ist, über das der Zapfen z. B. mit einer Stange verbindbar ist, die an der Radaufhängung angelenkt ist. Der Kugelkopf (KK) kann bei einem anderen Ausführungsbeispiel auch direkt mit einer hier nicht gezeigten Stange zur Anlenkung an die Radaufhängung verbunden sein.

Zum Schutz der Kugelgelenkverbindung vor Umwelteinflüssen ist das Kugelgelenk, bestehend aus Kugelpfanne (KP) und Kugelkopf (KK) von einem elastischen Faltenbalg (N) umschlossen.

Wie in Figur 1 dargestellt, ist die zu detektierende Drehbewegung durch die Symmetrieachse des Zapfens (Z), die in der Zeichenebene liegt, und durch einen eingezeichneten Pfeil festgelegt.

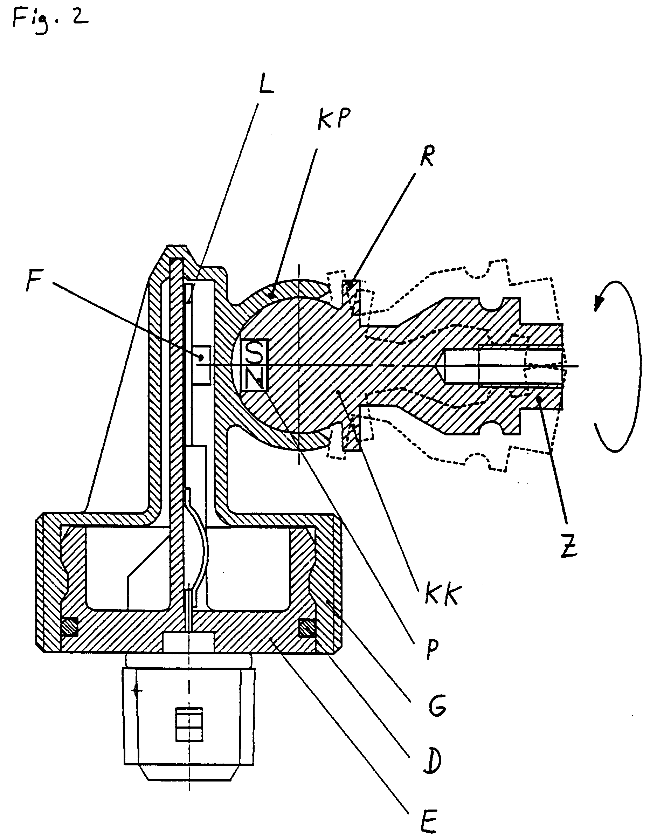

Figur 2 zeigt eine besondere Ausführung des erfindungsgemäßen Fahrzeugniveaugebers entsprechend Figur 1. Auch bei dieser Ausführung weist das erste Bauteil ein Gehäuse (G) mit einer Kugelpfanne (KP), einen in das Gehäuse (G) eingesetzten Einsatz (E), eine in dem Gehäuse angeordnete Leiterplatte (L) und einen magnetfeldempfindlichen Fühler (F) auf. Das zweite mit der Radaufhängung zu verbindende Bauteil ist wie in Figur 1 als ein Zapfen ausgebildet, der einstückig mit einem Kugelkopf (KK) verbunden ist. Zur Begrenzung von Kippbewegungen, die bei einem starken Ein- und Ausschwingen des Kraftfahrzeuges auftreten, weist der Kugelkopf (KK) einen Kragen (R) auf, der diese Kippbewegungen begrenzt und in Drehbewegungen umwandelt. Die maximal zulässigen Kippbewegungen sind mit gestrichelten Linien in die Figur 2 eingezeichnet. Hierdurch wird die räumliche Bewegung des Permanentmagneten (P) zu dem Fühler (F) begrenzt. Auch bei dieser Ausführungsform ist der Einsatz (E) gegenüber dem Gehäuse (G) durch eine Dichtung (D) abgedichtet.

Zum Schutz der Kugelgelenkverbindung, bestehend aus Kugelpfanne (KP) und Kugelkopf (KK), ist auch bei der in Figur 2 gezeigten Ausführung ein Faltenbalg (N), wie in Figur 1, vorgesehen, der jedoch zur Verdeutlichung der in Figur 2 gezeigten Bewegungsmöglichkeiten weggelassen wurde.

Bei einem anderen Ausführungsbeispiel kann auch die Kugelpfanne mit dem Zapfen und/oder einer Stange zur Anlenkung an die Radaufhängung verbunden sein und kann der Kugelkopf mit dem Gehäuse verbunden sein. Bei einer solchen Ausführung ist der Permanentmagnet in der Kugelpfanne angeordnet und ist der magnetfeldempfindliche Fühler dem Permanentmagneten gegenüberliegend in dem Kugelkopf angeordnet.

Im folgenden wird kurz die Funktionsweise des Fahrzeugniveaugebers erläutert.

Im Einbauzustand ist das Gehäuse (G) über die Befestigungseinrichtung (B) fest mit dem Fahrzeugchassis verbunden. Der Kugelkopf (KK) ist in die Kugelpfanne (KP) eingesetzt und der mit dem Kugelkopf (KK) verbundene Zapfen oder die Stange ist an der Radaufhängung angelenkt. Die Anordnung erfolgt dabei in der Art, daß bei Lageänderungen der Kraftfahrzeugkarosserie gegenüber der Radaufhängung, das heißt bei Lageänderungen der Kraftfahrzeugkarosserie gegenüber der Fahrbahn, der Kugelkopf (KK) gegenüber der Kugelpfanne (KP) in der eingezeigten Drehrichtung, die in der Zeichnungsebene liegt, verdreht wird. Durch die Verdrehung des Kugelkopfes (KK) in der Kugelpfanne (KP) wird der Permanentmagnet (P) mit verdreht, so daß sich das Magnetfeld in bezug auf den magnetfeldempfindlichen Fühler (F) ändert. Mit der Änderung des Magnetfeldes ändert sich auch das Signal von dem magnetfeldempfindlichen Fühler (F), so daß ein exaktes Lagesignal erzeugt wird. Die zusätzlich auftretenden räumlichen Bewegungen, die von der reinen Drehbewegung um die eingezeichnete Symmetrieachse in angegebener Pfeilrichtung abweichen, beeinflussen das Meßergebnis nicht negativ und können sogar bei entsprechender Auswertung durch eine Elektronik oder eine Rechenschaltung zu Regelungszwecken herangezogen werden. Aus diesem Grund, und da der Sensor bei kleinen räumlichen Abmessungen und einer hohen Langzeitbeständigkeit exakte Meßsignale liefert, eignet sich dieser insbesondere für die Verwendung in Leuchtweitenregeleinrichtungen von Kraftfahrzeugen. Bei einer dynamischen Leuchtweitenregelung ist es von Vorteil, wenn mit hoher Zuverlässigkeit kontinuierlich exakte Lagesignale zur Verfügung stehen. Dies wird durch den erfindungsgemäßen Fahrzeugniveaugeber gewährleistet.

## Patentansprüche

1. Fahrzeugniveaugeber mit zwei beweglich zueinander angeordneten, miteinander verbundenen Bauteilen, wobei das eine Bauteil mit dem Fahrzeugchassis und das andere Bauteil mit der Radaufhängung verbunden ist und mit einer Meßeinrichtung zur Bestimmung der Lageänderung zwischen den Bauteilen, dadurch gekennzeichnet, daß die Meßeinrichtung ein magnetoresistiver Sensor, bestehend aus einem magnetfeldempfindlichen Fühler (F) und einem Permanentmagneten (P) ist, daß die Bauteile durch ein Kugelgelenk, bestehend aus einer Kugelpfanne (KP) und einem in die Kugelpfanne (KP) eingesetzten Kugelkopf (KK)miteinander verbunden sind und daß der magnetfeldempfindliche Fühler (F) und der Permanentmagnet (P) sich gegenüberliegend in dem oberen Scheitelpunkt des Kugelkopfes (KK) und im Bereich unterhalb des Scheitelpunktes der Öffnung der Kugelpfanne (KP) angeordnet sind.

2. Fahrzeugniveaugeber nach Anspruch 1, dadurch gekennzeichnet, daß das mit dem Fahrzeugchassis verbundene Bauteil ein Gehäuse (G) aufweist, daß in das Gehäuse (G) ein das Gehäuse (G) abschließender Einsatz (E) eingesetzt ist, daß der Einsatz (E) einen elektrischen Steckverbinder (S) aufweist, daß der elektrische Steckverbinder (S) elektrisch leitend mit einer Leiterplatte (L) in dem Gehäuse (G) verbunden ist und daß der magnetfeldempfindliche Fühler (F) mit der Leiterplatte (L) verbunden ist.

3. Fahrzeugniveaugeber nach Anspruch 2, dadurch gekennzeichnet, daß die für den Betrieb des magnetfeldempfindlichen Fühlers (F) erforderliche Schaltungsanordnung auf der Leiterplatte (L) angeordnet ist.

4. Fahrzeugniveaugeber nach Anspruch 3, dadurch gekennzeichnet, daß zwischen dem Gehäuse (G) und dem Einsatz (E) eine Dichtung (D) angeordnet ist.

5. Fahrzeugniveaugeber nach Anspruch 4, dadurch gekennzeichnet, daß das Gehäuse eine Befestigungseinrichtung (B) zur Befestigung mit dem Fahrzeugchassis aufweist.

6. Fahrzeugniveaugeber nach einem der vorstehenden Ansprüche, dadurch gekennzeichnet, daß die Kugelpfanne (KP) mit dem Gehäuse (G) verbunden ist und daß der Kugelkopf (KK) mit dem mit der Radaufhängung verbundenen Bauteil verbunden ist.

7. Fahrzeugniveaugeber nach Anspruch 6, dadurch gekennzeichnet, daß der Permanentmagnet (P) in dem Kugelkopf (KK) angeordnet ist und daß der Fühler (F) in dem Gehäuse (G) oder der Kugelpfanne (KP) angeordnet ist.

8. Fahrzeugniveaugeber nach einem der Ansprüche 1 bis 5, dadurch gekennzeichnet, daß die Kugelpfanne (KP) mit dem mit der Radaufhängung verbundenen Bauteil verbunden ist und daß der Kugelkopf (KK) mit dem Gehäuse (G) verbunden ist.

9. Fahrzeugniveaugeber nach Anspruch 8, dadurch gekennzeichnet, daß der Permanentmagnet (P) in der Kugelpfanne (KP) angeordnet ist und daß der Fühler (F) in dem Kugelkopf (KK) angeordnet ist.

10. Fahrzeugniveaugeber nach einem der vorstehenden Ansprüche, dadurch gekennzeichnet, daß das mit der Radaufhängung verbundene Bauteil aus einem mit der Kugelpfanne (KP) oder dem Kugelkopf (KK) verbundenen Zapfen (Z) und/oder einer Stange besteht.

11. Fahrzeugniveaugeber nach einem der vorstehenden Ansprüche, dadurch gekennzeichnet, daß ein Faltenbalg (N) die Verbindung, bestehend aus dem Kugelkopf (KK) und der Kugelpfanne (KP), umschließt.

12. Fahrzeugniveaugeber nach einem der vorstehenden Ansprüche, dadurch gekennzeichnet, daß an dem Kugelkopf (KK) ein die Kippbewegung begrenzender Kragen (R) angeordnet ist.

13. Verwendung des Fahrzeugniveaugebers nach einem der vorstehenden Ansprüche in Leuchtweitenregeleinrichtungen von Kraftfahrzeugen.

14. Verwendung des Fahrzeugniveaugebers einem der vorstehenden Ansprüche in Niveauregeleinrichtungen oder aktiven Fahrwerksregeleinrichtungen von Kraftfahrzeugen.

## Claims

1. A vehicle level transmitter having two components which are connected to each other and which can move in relation to each other, wherein one component is attached to the vehicle chassis and the other component is attached to the wheel suspension, and having a measuring device for determining the change in position between the components, characterised in that the measuring device is a magneto-resistive sensor consisting of a magnetic field-sensitive sensing element (F) and a permanent magnet (P), that the components are connected to each other by a ball and socket joint consisting of a spherical socket (KP) and a spherical head (KK) inserted in the spherical socket (KP), and that the magnetic field-sensitive sensing element (F) and the permanent magnet (P) are disposed opposite each other in the upper vertex of the spherical head (KK) and in the region underneath the vertex of the opening of the spherical socket (KP).

2. A vehicle level transmitter according to claim 1, characterised in that the component attached to the vehicle chassis comprises a housing (G), that an insert (E) which blanks off the housing (G) is inserted in the housing (G), that the insert (E) has an electrical plug-in connector (S), that the electrical plug-in connector (S) is electrically conductively connected to a printed circuit board (L) in the housing (G) and that the magnetic field-sensitive sensing element (F) is connected to the printed circuit board (L).

3. A vehicle level transmitter according to claim 2, characterised in that the requisite circuit arrangement for the operation of the magnetic field-sensitive sensing element (F) is disposed on the printed circuit board (L).

4. A vehicle level transmitter according to claim 3, characterised in that a seal (D) is disposed between the housing (G) and the insert (E).

5. A vehicle level transmitter according to claim 4, characterised in that the housing has a fixing device (B) for fixation to the vehicle chassis.

6. A vehicle level transmitter according to any one of the preceding claims, characterised in that the spherical socket (KP) is attached to the housing (G) and that the spherical head (KK) is attached to the component which is attached to the wheel suspension.

7. A vehicle level transmitter according to claim 6, characterised in that the permanent magnet (P) is disposed in the spherical head (KK) and that the sensing element (F) is disposed in the housing (G) or in the spherical socket (KP).

8. A vehicle level transmitter according to any one of claims 1 to 5, characterised in that the spherical socket (KP) is attached to the component which is attached to the wheel suspension and that the spherical head (KK) is attached to the housing (G).

9. A vehicle level transmitter according to claim 8, characterised in that the permanent magnet (P) is disposed in the spherical socket (KP) and that the sensing element (F) is disposed in the spherical head (KK).

10. A vehicle level transmitter according to any one of the preceding claims. characterised in that the component attached to the wheel suspension consists of a spigot (Z) and/or a rod attached to the spherical socket (KP) or to the spherical head (KK).

11. A vehicle level transmitter according to any one of the preceding claims. characterised in that an expansion bellows (N) surrounds the joint consisting of the spherical head (KK) and the spherical socket (KP).

12. A vehicle level transmitter according to any one of the preceding claims. characterised in that a collar (R) which restricts the tilting movement is disposed on the spherical head (KK).

13. The use of the vehicle level transmitter according to any one of the preceding claims in headlamp beam range control devices of motor vehicles.

14. The use of the vehicle level transmitter according to any one of the preceding claims in level control devices or in active chassis control devices of motor vehicles.

## Revendications

1. Détecteur de niveau pour des véhicules, comportant deux composants agencés de façon mobile l'un par rapport à l'autre et reliés l'un à l'autre, dans lequel l'un des composants est relié au châssis de véhicule et l'autre composant est relié à la suspension des roues, et comportant un dispositif de mesure pour déterminer le changement de position entre les composants, caractérisé en ce que le dispositif de mesure est un détecteur magnétorésistif constitué par un palpeur sensible au champ magnétique (F) et par un aimant permanent (P), en ce que les composants sont reliés l'un à l'autre par une articulation sphérique constituée par une cavité sphérique (KP) et par une tête sphérique (KK) mise en place dans la cavité sphérique (KP), et en ce que le palpeur sensible au champ magnétique (F) et l'aimant permanent (P) sont agencés en vis-à-vis l'un de l'autre au sommet supérieur de la tête sphérique (KK) et dans la région au-dessous du somment de l'ouverture de la cavité sphérique (KP).

2. Détecteur de niveau selon la revendication 1, caractérisé en ce que le composant relié au châssis de véhicule présente un boîtier (G), en ce qu'un insert (E) refermant le boîtier (G) est mis en place dans le boîtier (G), en ce que l'insert (E) présente un connecteur enfichable électrique (S), en ce que le connecteur enfichable électrique (S) est relié électriquement à une carte imprimée (L) dans le boîtier (G), et en ce que le palpeur sensible au champ magnétique (F) est relié à la carte imprimée (L).

3. Détecteur de niveau selon la revendication 2, caractérisé en ce que l'agencement de connexion nécessaire pour le fonctionnement du palpeur sensible au champ magnétique (F) est agencé sur la carte imprimée (L).

4. Détecteur de niveau selon la revendication 3, caractérisé en ce qu'il est prévu entre le boîtier (G) et l'insert (E) un joint d'étanchement (D).

5. Détecteur de niveau selon la revendication 4, caractérisé en ce que le boîtier présente un dispositif de fixation (B) pour la fixation avec le châssis de véhicule.

6. Détecteur de niveau selon l'une quelconque des revendications précédentes, caractérisé en ce que la cavité sphérique (KP) est reliée au boîtier (G), et en ce que la tête sphérique (KK) est reliée au composant relié à la suspension des roues.

7. Détecteur de niveau selon la revendication 6, caractérisé en ce que l'aimant permanent (P) est agencé dans la tête sphérique (KK), et en ce que le palpeur (F) est agencé dans le boîtier (G) ou dans la cavité sphérique (KP).

8. Détecteur de niveau selon l'une quelconque des revendications 1 à 5, caractérisé en ce que la cavité sphérique (KP) est reliée au composant relié à la suspension des roues, et en ce que la tête sphérique (KK) est reliée au boîtier (G).

9. Détecteur de niveau selon la revendication 8, caractérisé en ce que l'aimant permanent (P) est agencé dans la cavité sphérique (KP), et en ce que le palpeur (F) est agencé dans la tête sphérique (KK).

10. Détecteur de niveau selon l'une quelconque des revendications précédentes, caractérisé en ce que le composant relié à la suspension des roues est constitué par un tenon (Z) et/ou une barre relié(e) à la cavité sphérique (KP) ou à la tête sphérique (KK).

11. Détecteur de niveau selon l'une quelconque des revendications précédentes, caractérisé en ce qu'un soufflet (N) enferme la liaison constituée par la tête sphérique (KK) et par la cavité sphérique (KP).

12. Détecteur de niveau selon l'une quelconque des revendications précédentes, caractérisé en ce qu'une collerette (R) limitant le mouvement de basculement est agencée sur la tête sphérique (KK).

13. Utilisation du détecteur de niveau selon l'une quelconque des revendications précédentes dans des dispositifs de régulation de la portée lumineuse de véhicules automobiles.

14. Utilisation du détecteur de niveau selon l'une quelconque des revendications précédentes dans des dispositifs de régulation de niveau ou dans des dispositifs de régulation actifs du train de roulement de véhicules automobiles.
